# EUROPÄISCHE PATENTSCHRIFT

(11) **EP 0 976 951 B1**
(45) Veröffentlichungstag und Bekanntmachung des Hinweises auf die Patenterteilung: **12.06.2002**
(21) Anmeldenummer: 99112497.5
(22) Anmeldetag: 01.07.1999
(51) Int. Cl.: F16H 57/00, F16H 57/02

(54) **Schaltgetriebe mit Anti-Rassel-Reibringanordnung**
Gearbox with anti-rattle ring arrangement
Boîte de vitesses avec anneau de friction contre des bruits d'engrènements

(30) Priorität: 25.07.1998 DE 19833525
(43) Veröffentlichungstag der Anmeldung: 02.02.2000
(73) Patentinhaber: Ford-Werke Aktiengesellschaft, 50735 Köln (DE); Dichtungstechnik G. Bruss GmbH & Co. KG, D-22955 Hoisdorf (DE)
(72) Erfinder: Paffhausen, Guido, 53225 Bonn (DE); Stoffels, Harald, 50735 Köln (DE); Goth, Peter, 22045 Hamburg (DE); Vom Schemm, Michael, 23858 Reinfeld (DE)
(74) Vertreter: Bonsmann, Manfred, Dipl.-Ing.

(56) Entgegenhaltungen:
- WO-A-91/14115
- DE-A- 3 734 898
- US-A- 5 758 541

## Beschreibung

Die Erfindung betrifft ein Schaltgetriebe, vorzugsweise für Kraftfahrzeuge, mit wenigstens einem auf einer Welle drehbar gelagerten Losrad und einer zur Herstellung einer Drehverbindung mit einer drehfest mit der Welle verbundenen Nabe einer Synchronisationseinrichtung mit dem Losrad verbindbaren Schiebemuffe und mit einer zwischen der Welle und dem Losrad angeordneten Reibringanordnung zur Vermeidung von Getrieberasseln.

In geschaltetem Zustand sind Losräder eines Schaltgetriebes über die Schiebemuffe und die Nabe der Synchronisationseinrichtung drehfest mit der welle verbunden. In nicht geschaltetem Zustand läuft das jeweilige Losrad zwar mit, aber es wird über das Losrad kein Drehmoment übertragen. Dabei wird dem Losrad über das sog. Schleppmoment das für dessen Drehung notwendige Moment aufgegeben.

In nicht geschaltetem Zustand kann von Losrädern ein als Getrieberasseln bezeichnetes Geräusch ausgehen. Dies beruht bei Schaltgetrieben von Kraftfahrzeugen darauf, daß Brennkraftmaschinen ungleichförmige Drehmomente auf die Welle aufgeben. Aufgrund von Reibungsverlusten im Schaltgetriebe und der Trägheit des jeweiligen Losrades können Zustände auftreten, während derer das jeweilige Losrad im nicht geschalteten Zustand innerhalb seines Zahnspieles mit einem mit dem Losrad kämmenden weiteren Zahnrad in einer ein Getrieberasseln bewirkenden Weise klappert. Um dies möglichst zu vermeiden ist es bekannt, zwischen der Welle und dem Losrad eine sog. "Anti-Rassel-Reibringanordnung" vorzusehen, durch deren Wirkung das Schleppmoment erhöht und auftretende Rasselgeräusche in den Bereich größerer Drehungleichförmigkeiten verschoben werden, mit dem Ergebnis, daß das bei den üblichen Betriebsbedingungen des Schaltgetriebes auftretende Rasselgeräusch stark verringert oder völlig unterdrückt wird bzw. das Rasselgeräusch wird in den Bereich größerer Drehungleichförmigkeiten verschoben.

Aus der US 5 758 541 ist ein gattungsgemäßes Schaltgetriebe mit einer Anti-Rassel-Reibring-Anordnung bekannt, bei welchem ein Reibring aus Gummi über einen im Querschnitt L-förmigen Ring aus Metall mit Festsitz auf der Welle gehalten wird. Der Reibring hat eine nach oben gegen ein Losrad anliegende Reiblippe, welche die bremsende Reibwirkung hervorruft. Um eine ausreichende Schmierung der Reibfläche zwischen Reiblippe und Losrad sicherzustellen, weist die Reiblippe an ihrer Oberfläche Vorsprünge auf, die für die Bildung eines Zwischenraums zur Aufnahme von Schmiermittel sorgen. Bei diesem System erfordert der verhältnismäßig hohe Aufwand für die Befestigung der Reibrings auf der Welle einen zweiteiligen Aufbau aus Reibring und Metallring. Die Stabilität der Befestigung hängt dabei entscheidend von der Verbindung zwischen Gummi und Metall ab. Weiterhin verändert sich das Reibverhalten der Reiblippe schnell, da die exponiert liegenden Vorsprünge einem hohen Verschleiss ausgesetzt sind und sich daher schnell abnutzen. Der Dauerbetrieb der Anordnung wird somit außerhalb des konstruktiv vorgesehenen Optimums stattfinden.

Die DE 37 34 898 A1 beschreibt eine Vorrichtung zum Bremsen von Zahnrädern, die als Losrad auf einer drehbaren Welle angeordnet sind. Die Vorrichtung besteht aus einem im Querschnitt winkelförmigen Metallring, mit welchem ein Reibring aus einer Kunststoffmasse fest verbunden ist. Der Metallring ist an der Innenwand des Losrades befestigt. Der Reibring hat eine Reiblippe, welche an der Welle anliegt und dort für die gewünschte Bremsung sorgt. Bei dieser Anordnung wird bei hohen Drehzahlen der Reibkontakt vermindert und schließlich aufgehoben, da die Reiblippe aufgrund der Fliehkraft von der Welle abhebt.

Um den Zeitpunkt des Abhebens zu verzögern kann gemäß der DE 37 34 898 A1 eine umlaufende Schraubenfeder vorgesehen sein, welche die Reiblippe an die Welle andrückt. Ein Kontakt der Schraubenfeder mit dem Teil des Metallringes oder des Reibringes, welcher am Losrad befestigt ist, findet jedoch nicht statt.

Aus der US 5 557 980 ist ein Schaltgetriebe mit einer Anti-Rassel-Reibring-Anordnung bekannt, bei der die Anti-Rassel-Reibring-Anordnung zwischen den sich in axialer Richtung gegenüberstehenden Flächen von Nabe und Losrad angeordnet ist. Diese Anordnung ist anwendbar, wenn geeignete Stirnflächen von Losrad und Nabe vorhanden sind und sich in gleicher Höhe gegenüberstehen. Weiterhin sind konstruktive Veränderungen an einem herkömmlichen Getriebe notwendig (Einfräsen einer Nut) und somit wird die axiale Baulänge des Getriebes durch den benötigten Abstand für den zwischen Nabe und Losrad angeordneten Reibung erhöht.

In der WO 91/14115 ist ein Reibring gezeigt, der in einer Anordnung eines Losrades auf einer Welle eingesetzt wird, wobei das Losrad über Nadeln auf der Welle gelagert ist und die Nadeln in einem Nadelkäfig gehalten werden. Der Reibring weist axial verlaufende, nach außen stehende Vorsprünge auf, die durch entsprechende Lücken im Nadelkäfig weisen und in Kontakt zum Losrad treten.

Aus der JP-OS 0 92 10 085 ist eine formschlüssig mit dem Losrad verbundene, einen U-förmigen Querschnitt aufweisende und als Bimetall ausgebildete Anti-Rassel-Reibringanordnung bekannt. Dabei ist eine Flanke der U-förmigen Anordnung fest mit dem Losrad verbunden, und die andere Flanke trägt an ihrer Außenseite ein unter Reibung gegen die Nabe der Synchronisationseinrichtung anliegendes Reibmaterial.

Diese Konstruktion ist platzaufwendig und erfordert entweder den Einsatz eines Losrades mit großen axialen Abmessungen oder führt zu einer erheblichen Verkürzung der Lagerfläche zur Lagerung des Losrades auf der Welle.

Für den Einsatz der bekannten Anti-Rassel-Reibringanordnung in vorhandenen Schaltgetrieben müssen diese erheblich umkonstruiert werden, da sowohl eine Änderung der Lagerbreite des Losrades als auch der Nabe der Synchronisationseinrichtung erforderlich ist. Zudem können Montageprobleme auftreten.

Aus der DE 23 20 571 B2 ist eine Vorrichtung zum Abbremsen von Zahnrädern bekannt, mit welcher störende Getriebegeräusche unterdrückt werden sollen. Dabei weist eine Bremsvorrichtung für Losräder auf einer Welle diametrale Bohrungen in der Welle auf, in welchen federvorgespannte Reibungsstükke vorgesehen sind. Die diametralen Bohrungen in der Welle bedeuten einen hohen Fertigungsaufwand und eine unerwünschte Schwächung des Wellenkörpers.

Der Erfindung liegt die Aufgabe zugrunde, eine Anti-Rassel-Reibringanordnung für ein Schaltgetriebe zu schaffen, welche eine robuste und montagefreundliche Bauweise aufweist und sowohl in radialer Richtung als auch in axialer Richtung einen geringen Bauraum erfordert. Weiterhin wird angestrebt, die Anti-Rassel-Reibringanordnung gegenüber bekannten Konstruktionen so zu verbessern, daß ein Einbau in ein bestehendes Schaltgetriebe ohne Konstruktionsänderungen vorgenommen werden kann. Weiterhin soll die Anordnung eine hohe Betriebssicherheit und eine lange Lebensdauer aufweisen.

Diese und weitere Aufgaben werden erfindungsgemäß mit den Merkmalen des Anspruchs 1 gelöst.

Zum Ausgleich der den Festsitz auf der Welle mindernden Einflüsse von Werkstoff-Relaxation und Wärmedehnung ist ein zusätzlicher Vorspannring auf dem Reibring vorgesehen, durch dessen Wirkung der Reibring dauerhaft in dem erforderlichen Maße drehfest mit der Welle verbunden ist.

Bei der Erfindung ist vorteilhaft, daß in einfacher Weise eine kraftschlüssige Verbindung zwischen dem Reibring und der Welle bei möglichst kleinem Bauraum in axialer Richtung und eine einfache Montagemöglichkeit erreicht wird.

Mit dem Vorspannring wird auf den Reibring in radialer Richtung nach innen eine derartige Vorspannung aufgebracht, daß dadurch der Reibring auf Dauer in dem erforderlichen Maße drehfest mit der Welle verbunden wird.

Zweckmäßige Ausgestaltungen der Erfindung ergeben sich aus den weiteren Unteransprüchen.

Die erfindungsgemäße Reibringanordnung ist preiswert, von geringem Gewicht, wärme- und reibungsbeständig und montagefreundlich. Eine Einstellung der Größe des Schleppmomentes kann durch Veränderung der Härte des Materials des Vorspannrings und/oder der Reibfläche des Reibrings gegen das Losrad und/oder die Dicke der Reiblippe erfolgen. Infolge der Elastizität des aus Kunststoff, vorzugsweise PTFE, bestehenden Reibringes ist die Montage des Reibrings auf der Welle in einfacher Weise möglich. Das Reibungsverhalten von PTFE in Notfallsituationen, d.h., unter Laufbedingungen, bei denen keine Schmierung erfolgt, ist günstig. Darüber hinaus ist PTFE wärmebeständiger als eine aus Gummi bestehende Reiblippe. Ein weiterer Vorteil eines aus PTFE bestehenden Reibrings liegt darin, daß hierdurch das Schleppmoment unter allen üblicherweise auftretenden Öltemperaturen bis über 100°C weitgehend konstant gehalten wird und außerdem die Lebensdauer von PTFE größer ist als diejenige einer aus Gummi bestehenden Reiblippe. Da der Reibring in axialer Richtung gesehen relativ schmal ausgebildet werden kann, steht ausreichend Platz für die Lagerung des Losrades auf der Welle zur Verfügung. Dies bietet die Möglichkeit des Einsatzes eines Lagers mit großer axialer Erstreckung und damit langer Lebensdauer. Ein weiterer Vorteil des Einsatzes von PTFE besteht darin, daß keine "Stick-Slip-Effekte" auftreten, wie es bei Gummi unter manchen Betriebsbedingungen der Fall ist. Eine aus PTFE bestehende Reiblippe weist - zumindest bei geringer Flächenpressung und bei hoher Gleitgeschwindigkeit, also bei Bedingungen, die den Hauptanwendungsfall der Erfindung darstellen - einen mit Gummi vergleichbaren Reibungskoeffizienten auf, kann aber wesentlich höher belastet und damit kleiner als ein entsprechendes Gummiteil ausgebildet werden, was zu einer Gewichtsreduzierung führt.

Mit dem in eine ringförmige Ausnehmung der Welle, vorzugsweise in einen ohnehin vorhandenen Freistich eingreifenden ringförmigen Innenwulst, wird in einfacher Weise eine formschlüssige axiale Fixierung des Reibrings erzielt.

Die Erfindung wird nachfolgend anhand des in den Zeichnungen dargestellten Ausführungsbeispiels näher erläutert. Es zeigen:
- Fig. 1: eine schematische Darstellung einer mit der Nabe einer Synchronisationseinrichtung drehfest verbundenen Welle, eines Teils eines auf der Welle gelagerten Losrades und eines Teils einer Anti-Rassel-Reibringanordnung gemäß der Erfindung;
- Fig. 2: eine Axialansicht des Reibrings gemäß Fig. 1;
- Fig. 3: eine Darstellung der Reibringanordnung aus Fig. 1 in vergrößertem Maßstab;
- Fig. 4: eine alternative Möglichkeit zur Gestaltung des Reibringes.

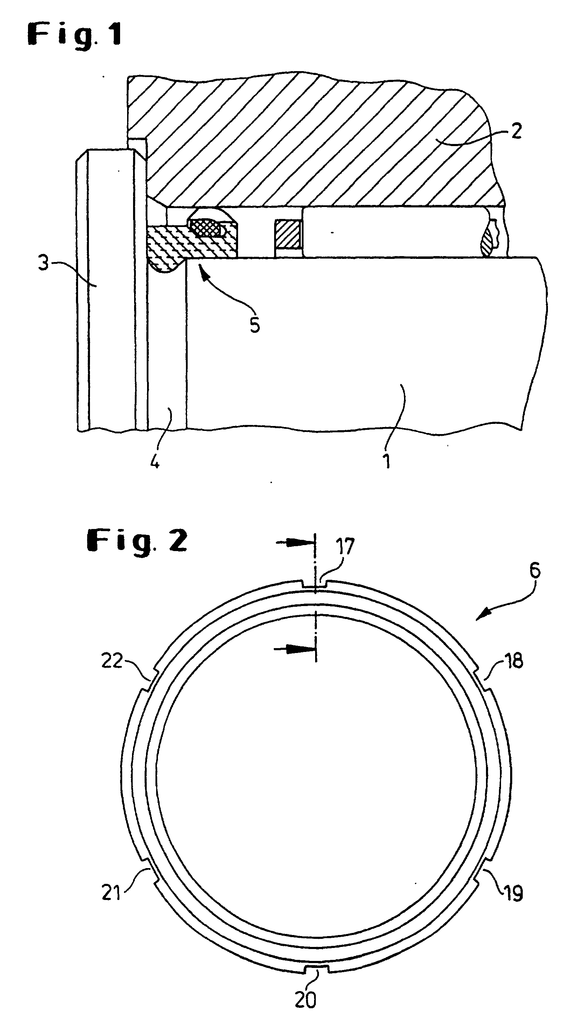

In einem (nicht dargestellten) Schaltgetriebe eines Kraftfahrzeugs mit Brennkraftmaschine (ebenfalls nicht dargestellt) ist eine in Fig. 1 abschnittsweise dargestellte Welle 1 vorgesehen. Auf der Welle 1 ist ein abschnittsweise dargestelltes Losrad 2 vorgesehen, dessen Zähne (nicht dargestellt) mit wenigstens einem weiteren Zahnrad (ebenfalls nicht dargestellt) kämmen. Das Losrad 2 ist auf der Welle 1 drehbar gelagert, wobei zur Vereinfachung der Darstellung die zwischen Welle 1 und der Innenbohrung des Losrades vorgesehene Lageranordnung und durch eine Nadel eines Nadellagers dargestellt ist.

Eine mit 3 bezeichnete Nabe einer (nicht dargestellten) Synchronisationseinrichtung ist mit der Welle 1 drehfest verbunden. Hierzu weist die Welle an ihrem Außenumfang in dem von der Nabe 3 überdeckten Bereich eine sich in Achsrichtung der Welle 1 erstreckende Keilverzahnung auf. Für die Herstellung dieser Keilverzahnung schließt sich hieran ein sog. Freistich 4 an, der bei der Herstellung der Keilverzahnung als Auslauf dient. Die (nicht dargestellte) Synchronisationseinrichtung ist über eine (nicht dargestellte) Schiebemuffe mit dem Losrad 2 verbindbar. Die Schiebemuffe ist in Achsrichtung der Welle 1 zwischen einer Position, in der die Synchronisationseinrichtung drehfest mit dem Losrad verbunden ist und einer weiteren Position, in der keine drehfeste Verbindung zwischen der Welle 1 und dem Losrad 2 besteht, verschiebbar. In der letztbeschriebenen Position der Schiebemuffe läuft das Losrad "lose" mit, und es wird über dieses Zahnrad kein Drehmoment übertragen, jedoch wird dem Zahnrad von der Welle 1 über das zwischen der Welle 1 und dem Losrad befindliche Lager ein Schleppmoment aufgegeben, welches dazu führt, daß sich das Losrad dreht. In diesem Zustand, in dem sich das Losrad außerhalb des Kraftflusses des Getriebes befindet, können infolge von Drehungleichförmigkeiten des Wellenantriebs Rasselgeräusche auftreten, die auf einem Zahnspiel zwischen den Zähnen des Losrades 2 und des mit diesem kämmenden weiteren Zahnrades beruhen. Diese unerwünschten Rasselgeräusche können durch eine Erhöhung des Schleppmomentes stark gemindert bzw. völlig unterbunden werden.

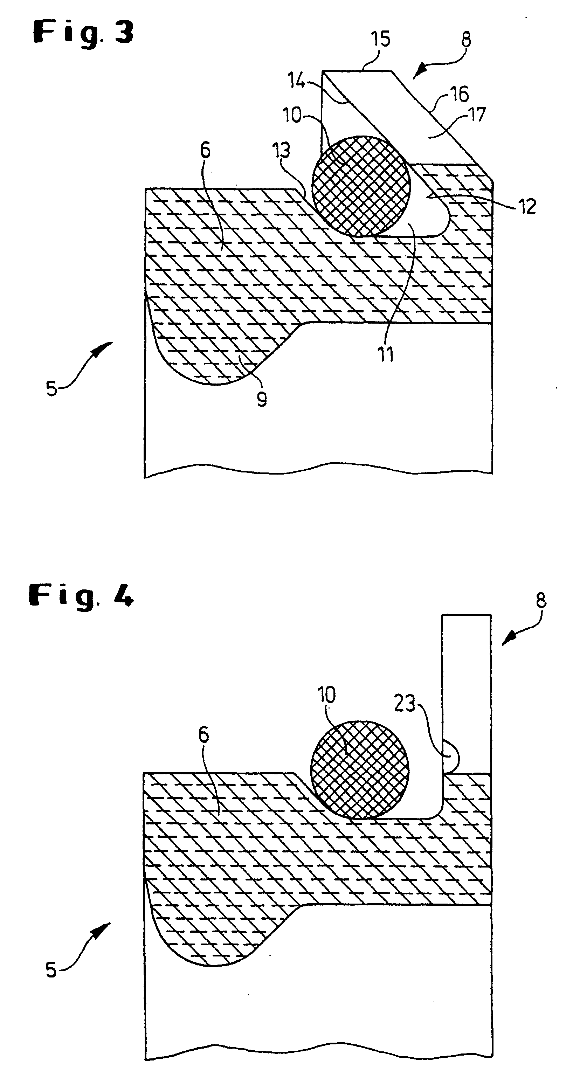

Zwecks Erhöhung des Schleppmomentes ist zwischen der Welle 1 und dem Losrad 2 eine insgesamt mit 5 bezeichnete Anti-Rassel-Reibringanordnung vorgesehen, die einen aus Polytetrafluorethylen (PTFE) bestehenden Reibring 6 mit einer an dessen Außenumfang angeformten, zur Anlage gegen die Innenöffnung des Losrades bestimmten Reiblippe 8 aufweist. Die Reiblippe 8 ist einstückig mit dem Reibring 6 ausgebildet. Zur axialen Fixierung des Reibrings 6 auf der Welle 1 weist der Reibring einen Innenwulst 9 auf, dessen Querschnittskontur der Querschnittskontur des Freistiches 4 entspricht. Der Innenwulst 9 greift in den Freistich 4 ein und sichert auf diese Weise den Reibring 6 gegen eine axiale Verschiebung auf der Welle 1. Weiterhin ist der Reibring mittels eines als Gummiring ausgebildeten und radial nach innen und außen gerichtete Spannkräfte ausübenden Vorspannrings 10 drehfest mit der Welle 1 verbunden. Der Vorspannring 10 liegt in einer umlaufend im Außenumfang des Reibrings vorgesehenen Ausnehmung 11. Wie aus Fig. 3 ersichtlich, ist die Querschnittskontur der Ausnehmung 11 größer als die Querschnittskontur des Vorspannrings 10.

Fig. 3 zeigt eine Ausgestaltung des Reibelementes, bei dem die gegenüberliegenden Innenwandungen 12 und 13 der Ausnehmung 11 jeweils parallel zueinander und schräg zur Drehachse der Welle 1 verlaufen. An die Innenwandung 12 schließt sich die mit 14 bezeichnete Flanke der Reiblippe 8 an.

In Gebrauchslage liegt ein Teilbereich der mit 16 bezeichneten Flanke der Reiblippe 8 gegen die Innenöffnung des Losrades unter Druck an. Gleichzeitig ist der Vorspannring 10 infolge des von der Reiblippe ausgeübten Druckes komprimiert. Dadurch wird durch Wirkung des Vorspannrings in radialer Richtung nicht nur eine nach innen sondern auch eine radial nach außen gerichtete Kraft ausgeübt. Das Schleppmoment zur Minderung bzw. völligen Unterdrückung eines unerwünschten Getrieberasselns kann durch entsprechende Auswahl der Härte des Werkstoffes des Vorspannrings 10 und/oder der Größe der Reibfläche 15, 16 des Reibrings und/oder der Dicke der Reiblippe 8 auf den gewünschten Wert eingestellt werden.

Der Reibring 6 weist weiterhin über seinen Umfang verteilt angeordnete, in axialer Richtung durchgehend ausgebildete Ausnehmungen 17 und 22 auf. Diese Ausnehmungen dienen dazu, sowohl einen ausreichenden Schmierölfluß zuzulassen, als auch die Anlagekraft der Reiblippe einzustellen.

Fig. 4 zeigt eine alternative Möglichkeit zur Fertigung des Reibelementes. Die Reiblippe 8 wird als zunächst scheibenförmiges Element aus einem PTFE-Block ausgestochen und anschließend spanlos in die Schräglage gedrückt. Diese spanlose Formung wird durch das Vorhandensein eines an einer Seite des scheibenförmigen Reibringkörpers vorgesehenen Einstichs 23 wesentlich vereinfacht.

## Patentansprüche

1. Schaltgetriebe, vorzugsweise für Kraftfahrzeuge, mit wenigstens einem auf einer Welle (1) drehbar gelagerten Losrad (2) und einer zur Herstellung einer Drehverbindung mit einer drehfest mit der Welle verbundenen Nabe (3) einer Synchronisationseinrichtung mit dem Losrad verbindbaren Schiebemuffe und mit einer zwischen der Welle und dem Losrad angeordneten Anti-Rassel-Reibringanordnung (5) mit einem Reibring (6), welcher eine an dessen Außenumfang angeformte, zur Anlage gegen das Losrad (2) vorgesehene Reiblippe (8) aufweist, und welcher in Gebrauchslage mit Festsitz auf der Welle (1) gehalten ist, wobei der Reibring (6) aus Kunststoff besteht, **dadurch gekennzeichnet, daß** zur Erhöhung des Kraftschlusses zwischen Welle und Reibring und zur Erhöhung der radialen Anlagekraft der Reiblippe ein Vorspannring (10) auf dem Reibring (6) vorgesehen ist.

2. Schaltgetriebe nach Anspruch 1, **dadurch gekennzeichnet, daß** der Reibring (6) aus Kunststoff auf der Basis von Polytetrafluorethylen (PTFE) besteht und die Reiblippe einstückig mit dem Reibring (6) ausgebildet ist.

3. Schaltgetriebe nach Anspruch 1 oder 2, **dadurch gekennzeichnet, daß** der Vorspannring (10) aus Gummi besteht.

4. Schaltgetriebe nach einem der Ansprüche 1 bis 3, **dadurch gekennzeichnet, daß** der Vorspannring (10) in Gebrauchslage derart auf dem Reibring (6) positioniert ist, daß ein dem zur Anlage gegen das Losrad (2) vorgesehenen Reibungsbereich (15,16) gegenüberliegender Innenbereich (14) der Reiblippe (8) gegen den Vorspannring (10) anliegt und den Reibring (6) dadurch verpreßt.

5. Schaltgetriebe nach einem der Ansprüche 1 bis 4, **dadurch gekennzeichnet, daß** der Vorspannring (10) in Gebrauchslage von einer umlaufend im Außenumfang des Reibrings vorgesehenen Ausnehmung (11) aufgenommen ist.

6. Schaltgetriebe nach Anspruch 5, **dadurch gekennzeichnet, daß** die Ausnehmung (11) zur Aufnahme des Volumens des Vorspannrings (10) in dessen verpreßtem Zustand geeignete Innenabmessungen aufweist.

7. Schaltgetriebe nach einem der Ansprüche 1 bis 6, **dadurch gekennzeichnet, daß** der Reibring (6) einen in eine ringförmige Ausnehmung der Welle (1) eingreifenden Innenwulst (9) aufweist.

8. Schaltgetriebe nach Anspruch 6 oder 7, **dadurch gekennzeichnet, daß** die Aussparung der Welle (1) ein sich an eine für die Aufnahme der Nabe (3) der Synchronisationseinrichtung in der Welle vorgesehene Keilverzahnung anschließender Freistich (4) ist.

9. Schaltgetriebe nach einem der Ansprüche 1 bis 8, **dadurch gekennzeichnet, daß** der Reibring (6) über seinen Umfang verteilt angeordnete, in axiale Richtung durchgehend ausgebildete Ausnehmungen (17 bis 22) aufweist.

10. Verfahren zur Herstellung eines Reibrings (6) zur Verwendung in einem Schaltgetriebe gemäß einem der Ansprüche 1 bis 9, **dadurch gekennzeichnet, daß** aus einem PTFE-Rohr ein Reibring-Rohling mit scheibenförmigem Reibringkörper mit einem an einer Seite vorgesehenen umlaufenden Einstich (23) hergestellt wird, und daß in einem weiteren Verfahrensschritt der Reiblippenkörper in die für die Arbeitsposition gewünschte Schräglage gedrückt wird, wobei der Druck von der den Einstich aufweisenden Seite gegenüberliegenden Seite aus aufgebracht wird.

## Claims

1. Gearbox, preferably for motor vehicles, with at least one loose wheel (2) arranged in a rotatable way on a shaft (1) and a sliding sleeve which can be connected with the loose wheel for the purpose of producing a rotation connection with a hub (3) of a synchronisation device which is connected in a rotationally secure way with the shaft and with an anti-rattle friction ring arrangement (5) positioned between the shaft and the loose wheel with a friction ring (6) which has a friction lip (8) formed on its outer perimeter for lying against the loose wheel (2), and which in the position of use is held with force fit on the shaft (1), wherein the friction ring (6) consists of plastic, **characterised in that** for the purpose of increasing the force-locking connection between shaft and friction ring and for increasing the radial positioning force of the friction ring a pre-tension ring (10) is provided on the friction ring (6).

2. Gearbox according to claim 1 **characterised in that** the friction ring (6) consists of plastic on the base of polytetrafluorethylene (PTFE) and the friction lip is formed as one component with the friction ring (6).

3. Gearbox according to claim 1 or 2 **characterised in that** the pre-tension ring (10) consists of rubber.

4. Gearbox according to one of the claims 1 to 3 **characterised in that** the pre-tension ring (10) in the position of use is positioned on the friction ring (6) in such a way that an inner area (14) of the friction lip (8) lying opposite the friction area (15, 16) provided for lying against the loose wheel (2) lies against the pre-tension ring (10) and thereby presses the friction ring (6).

5. Gearbox according to one of the claims 1 to 4 **characterised in that** the pre-tension ring (10) in the position of use is received by a recess (11) running in the outer perimeter of the friction ring.

6. Gearbox according to claim 5 **characterised in that** the recess (11) for receiving the volume of the pre-tension ring (10) has in its pressed state suitable inner dimensions.

7. Gearbox according to one of the claims 1 to 6 **characterised in that** the friction ring (6) has an inner bead (9) engaging in a ring-shaped recess of the shaft (1).

8. Gearbox according to claim 6 or 7 **characterised in that** the recess of the shaft (1) is an undercut (4) connecting to splining provided in the shaft for receiving the hub (3) of the synchronisation device.

9. Gearbox according to one of the claims 1 to 8 **characterised in that** the friction ring (6) has recesses (17 to 22) distributed over its perimeter and formed in a through way in axial direction.

10. Method of manufacturing a friction ring (6) for use in a gearbox according to one of the claims 1 to 9 **characterised in that** from a PTFE pipe a friction ring blank with a disc-shaped friction ring body with a circling recess (23) provided on one side is manufactured and that in a further stage of the process the friction lip body is pressed into the diagonal position desired for the working position, wherein the pressure is applied from the side lying opposite the side having the recess.

## Revendications

1. Boîte de vitesses, de préférence pour véhicules automobiles, comprenant au moins une roue libre (2) montée de façon rotative sur un arbre (1) et un manchon coulissant pouvant être relié de façon solidaire en rotation à la roue libre de manière à créer un joint tournant avec un moyeu (3), relié solidairement en rotation à l'arbre, d'un dispositif de synchronisation, ainsi qu'un dispositif à anneau de friction anti-cliquetis (5) comportant un anneau de friction (6) qui présente une lèvre de friction (8) ménagée sur son pourtour extérieur et destinée à venir s'appliquer contre la roue libre (2) et qui, en position d'utilisation, est maintenu avec un ajustement serré sur l'arbre (1), sachant que l'anneau de friction (6) est en matière plastique, **caractérisée en ce que**, pour augmenter l'adhérence entre l'arbre et l'anneau de friction et pour augmenter la force d'application radiale de la lèvre de friction, un anneau de précontrainte (10) est prévu sur l'anneau de friction (6).

2. Boîte de vitesses selon la revendication 1, **caractérisée en ce que** l'anneau de friction (6) en matière plastique est à base de polytétrafluoréthylène (PTFE) et **en ce que** la lèvre de friction et l'anneau de friction (6) sont d'un seul tenant.

3. Boîte de vitesses selon la revendication 1 ou 2, **caractérisée en ce que** l'anneau de précontrainte (10) est en caoutchouc.

4. Boîte de vitesses selon l'une des revendications 1 à 3, **caractérisée en ce qu'**en position d'utilisation, l'anneau de précontrainte (10) est positionné sur l'anneau de friction (6) de telle manière qu'une zone interne (14) de la lèvre de friction (8) qui est opposée à la zone de friction (15, 16) prévue pour venir s'appliquer contre la roue libre (2) est appliquée contre l'anneau de précontrainte (10) et comprime de ce fait l'anneau de friction (6).

5. Boîte de vitesses selon l'une des revendications 1 à 4, **caractérisée en ce que** l'anneau de précontrainte (10) est logé en position d'utilisation dans un évidement (11) prévu sur tout le pourtour extérieur de l'anneau de friction.

6. Boîte de vitesses selon la revendication 5, **caractérisée en ce que** l'évidement (11) destiné à recevoir le volume de l'anneau de précontrainte (10) comprimé présente des dimensions intérieures appropriées.

7. Boîte de vitesses selon l'une des revendications 1 à 6, **caractérisée en ce que** l'anneau de friction (6) présente un renflement intérieur (9) se mettant en prise avec un évidement annulaire de l'arbre (1).

8. Boîte de vitesses selon la revendication 6 ou 7, **caractérisée en ce que** l'évidement de l'arbre (1) est une découpe (4) faisant suite à une cannelure prévue dans l'arbre pour recevoir le moyeu (3) du dispositif de synchronisation.

9. Boîte de vitesses selon l'une des revendications 1 à 8, **caractérisée en ce que** l'anneau de friction (6) présentent des évidements (17 à 22) ininterrompus dans la direction axiale, qui sont répartis sur son pourtour.

10. Procédé pour fabriquer un anneau de friction (6) destiné à être mis en oeuvre dans une boîte de vitesses selon l'une des revendications 1 à 9, **caractérisé en ce que** l'on fabrique à partir d'un tube en PTFE une ébauche d'anneau de friction en forme de disque avec une découpe circulaire (23) prévue d'un côté, et **en ce que**, dans une seconde étape, on pousse la lèvre de friction dans la position oblique convenant pour le fonctionnement du dispositif, sachant que la pression est exercée depuis le côté opposé à celui présentant la découpe.
